Europäisches Patentamt

European Patent Office

Office européen des brevets

(11) Veröffentlichungsnummer: **0 271 799**
A2

## (12) EUROPÄISCHE PATENTANMELDUNG

(21) Anmeldenummer: 87118089.9

(22) Anmeldetag: 08.12.87

(51) Int. Cl.4 **G03C 1/82** , G03C 1/78 , G03C 1/60 , C08J 7/04

(30) Priorität: 16.12.86 DE 3642848

(43) Veröffentlichungstag der Anmeldung:
22.06.88 Patentblatt 88/25

(84) Benannte Vertragsstaaten:
BE CH DE FR GB IT LI NL

(71) Anmelder: HOECHST AKTIENGESELLSCHAFT
Postfach 80 03 20
D-6230 Frankfurt am Main 80(DE)

(72) Erfinder: Thoese, Klaus, Dr. Dipl.-Chem.
Erbsenacker 15
D-6200 Wiesbaden(DE)
Erfinder: Jung, Karl-Heinz
Schiersteiner Strasse 28
D-6200 Wiesbaden(DE)

(54) **Polyesterfolie.**

(57) Oberflächlich permanent antistatisch ausgerüstete Polyesterfolie durch Behandlung einer biaxial gereckten und thermisch fixierten Folie mit einer wäßrigen Dispersion.

Die Polyesterfolie besitzt eine Beschichtung, die einen Sulfonatgruppen tragenden Mischpolyester und mindestens ein von Aminosäuren oder Eiweißhydrolysaten abgeleitetes Salz enthält.

Das Material kann für Diazo-Duplizierfilme verwendet werden.

EP 0 271 799 A2

## POLYESTERFOLIE

Die Erfindung betrifft eine biaxial gereckte und thermisch fixierte Polyesterfolie, die auf mindestens einer Seite eine, einen Sulfonatgruppen tragenden Mischpolyester enthaltende Beschichtung besitzt.

Die Herstellung von Sulfonatgruppen tragenden Mischpolyestern und die Verwendung als Beschichtungsbestandteil für Kunststofffolien sind bekannt (US-PS 3 563 942). Sie können aus wäßriger Lösung oder Dispersion angetragen werden und dienen als Schichtträger oder als haftvermittelnde Zwischenschichten (DE-PS 2 813 014). Die Mischpolyesterbeschichtungen sind für sich allein nicht antistatisch wirksam. Ihr Antrag kann auf die fertige Kunststofffolie oder während ihrer Herstellung erfolgen (US-PS 4,476,189). Neben ihren minderen Haftungseigenschaften haben Folien aus Polyester trotz ihres hohen Gebrauchswertes den weiteren Nachteil, daß sie, wie alle Kunststoffe, elektrostatisch stark aufladbar sind.

Es ist bekannt, den Kunststoffen zur Verhinderung dieser Eigenschaft Antistatika in Masse einzuverleiben oder sie mit einer dünnen Schicht aus einem Antistatikum oberflächlich zu versehen. Bei Materialien nach der ersten Art ist entweder der erreichbare antistatische Effekt gering, oder aber, bei höherem Zusatz von Antistatikum, verschlechtern sich deutlich die mechanischen Eigenschaften. Das Auftragen eines Antistatikums führt zu weniger elektrostatisch aufladbaren Oberflächen. Bei den Antistatika handelt es sich meistens um in Wasser lösliche, niedermolekulare oder polymere Produkte. Hierdurch sind jedoch der Beständigkeit der antistatisch wirkenden Schicht gegen Feuchtigkeit bzw. Wasser Grenzen gesetzt. Außerdem lassen sich diese Schichten mechanisch leicht abreiben und verlieren damit ihre Wirkung, oder sie kleben bei Erwärmung der Folien.

Kombiniert man dagegen herkömmliche Antistatika mit Bindemitteln, so erhält man zwar eine gegen mechanische Einwirkung beständige antistatische Wirkung, aber nach der Einwirkung von Wasser geht auch diese verloren.

Es war Aufgabe der Erfindung eine oberflächlich antistatisch ausgerüstete Polyesterfolie durch Behandlung einer fertig verarbeiteten Folie mit einer wäßrigen Dispersion zu schaffen, deren getrocknete Schicht eine hohe Beständigkeit gegen Feuchtigkeit und Wasser besitzt, die bei mechanischem Angriff ihre antielektrostatischen Eigenschaften nicht oder nur in geringem Maße verliert und deren Oberfläche bei Erwärmen nicht klebrig wird.

Die Aufgabe wird durch eine biaxial gereckte und thermisch fixierte Polyesterfolie gelöst, die auf mindestens einer Seite eine, einen Sulfonatgruppen tragenden Mischpolyester enthaltende Beschichtung besitzt. Die Folie enthält in der Beschichtung mindestens ein von Aminosäuren oder Eiweißhydrolysaten abgeleitetes Salz, insbesondere ein Salz des N-Acylsarkosins oder ein Salz eines N-Acylderivates von Eiweißhydrolysaten.

Das Salz ist vorzugsweise zu 5 bis 25, insbesondere zu 6 bis 20 Gewichtsprozent, in der Beschichtung vorhanden.

Durch die Erfindung wird erreicht, daß man nunmehr antistatisch ausgerüstete Polyesterfolien zur Verfügung stellen kann, z.B. als Schichtträger lichtempfindlicher oder elektrophotographisch verarbeitbarer Filme, für beschreibbare Filme, für Montagefolien, als Kassettenbeilagescheiben, als Vorlauf für Videobänder, deren antistatische Wirkung nicht durch Feuchte, Wasser, mechanischen oder thermischen Angriff verloren geht.

Die erfindungsgemäß antistatisch ausgerüstete Polyesterfolie wird vorzugsweise z.B. für Diazoduplizierfilme oder auch für elektrophotographisch bebilderbare Filme eingesetzt, die auf Maschinen bei hohen Temperaturen verarbeitet werden. Die Antistatik soll auch noch nach der Verarbeitung permanent vorhanden sein.

Die erfindungsgemäße Polyesterfolie besitzt auf mindestens einer Seite eine Schicht mit einem Bindemittel aus einem Sulfonatgruppen enthaltenden, in Wasser dispergierbaren Mischpolyester, in dem mindestens ein Antistatikum eingebettet ist.

Als antistatisch wirksame Verbindungen haben sich überraschenderweise Stoffe bewährt, die man als Tenside anwendet. Sie lassen sich von Aminosäuren ableiten. Hier haben sich N-Acylsarkosine, wie fettsäureartige Verbindungen mit Lauryl-, Kokoyl-, Stearyl-oder Oleyl-Gruppen, als Ammonium-oder Alkali- oder z.B. Triethanolamin-Salze, bewährt. Auch die Eiweißhydrolysate in Form ihrer Salze, die man aus natürlichem Kollagen erhält und die man mit langkettigen Fettsäuren, wie etwa Kokosfettsäure kondensiert, sind einsetzbar.

Es ist sehr von Vorteil, daß diese Substanzen physiologisch gut verträglich sind und daher z.B. auch in der Kosmetik angewendet werden. Der Anwender muß also bei der Verarbeitung nicht auf zusätzliche umweltschützende Maßnahmen Rücksicht nehmen.

Andere Antistatika zeigten entweder weniger permanente Wirkung oder mußten in zu hoher Menge eingesetzt werden. Bei anderen Antistatika mußten zusätzliche Netzmittel verwendet werden, damit die wäßrige Lösung ausreichend auf der Polyesteroberfläche netzte.

Die erfindungsgemäß eingesetzten Sulfonatgruppen tragenden Mischpolyester sind an sich bekannt aus DE-AS 18 16 163, entsprechend US-PS 3,734,874, DE-PS 28 13 014, entsprechend US-PS 4,252,885 oder US-PS 3,563,942. Es handelt sich im wesentlichen um in Wasser lösliche oder dispergierbare Polyester, die man durch Umsetzung von aliphatischen, cycloaliphatischen oder aromatischen Dicarbonsäuren mit aliphatischen, cycloaliphatischen oder aroamtischen Diolen erhält, wobei die veresterbaren Dicarbonsäuren oder Diole mit jeweils einem an einem aro matischen Ring befindlichen -SO₃ M-Rest, worin M ein Wasserstoff- oder Metallion darstellt, versehen sind.

Zur Verbesserung der thermischen Stabilität der Schicht geht man zweckmäßigerweise von Mischpolyestern aus, die einen möglichst hohen Glaspunkt aufweisen.

Es hat sich als vorteilhaft erwiesen, der Beschichtung Vernetzer zuzusetzen. Als Vernetzungsmittel sind vorzugsweise handelsübliche von Harnstoff oder Melamin abgeleitete teilweise oder ganz veretherte Formaldehydverbindungen geeignet. Insbesondere haben sich Oligo-Methoxymethylmelamine, wie Hexamethoxymethylmelamin bewährt. Die Vernetzungsmittel werden der Beschichtung in kleiner Menge zugesetzt. In diesem Fall muß die Beschichtungslösung sauer eingestellt werden, damit die Vernetzungsreaktion ausreichend schnell abläuft.

Man kann dem System auch noch andere thermisch stabile Bindemittel, die aus wäßriger Dispersion verarbeitet werden können, zusetzen. Dafür haben sich besonders Kunststoffdispersionen aus Polymethylmethacrylat bewährt. Besonders klare Filme aber erhält man, wenn auf eine zweite Binderkomponente verzichtet werden kann.

Die wäßrigen Lösungen können mit jedem Antrags-System aufgetragen werden, das ausreichend gleichmäßig dünne Schichten erzeugt. Die aufgetragene Menge der getrockneten Beschichtung liegt zwischen 0,05 - 3,0 g/m². Sie ist dem jeweiligen Einsatzzweck der antistatisch ausgerüsteten Polyesterfolie anzupassen. Man kann die erfindungsgemäßen Antistatik-Schichten auf eine oder auf beide Seiten der Polyesterfolie auftragen, entscheidend ist auch dafür die Verwendung des Materials.

Als Polyesterfolien werden vorzugsweise solche aus Polyalkylenterephthalat verwendet. Das Material wird insbesondere als Diazo-Duplizierfilm mit einem Filmträger aus Polyethylenterephthalat verwendet, der rückwärtig eine permanente antistatisch ausgerüstete Beschichtung nach Anspruch 1 trägt.

Die Beschichtungen der erfindungsgemäßen Polyesterfolien können weiterhin auch feinteilige, anorganische oder organische Stoffe enthalten, die zum Beispiel als Schlupfmittel oder Mattierungsmitel dienen. Zur Anfärbung lassen sich in die Beschichtungen auch Farbstoffe oder Pigmente einarbeiten.

Die folgenden Beispiele sollen den Anmeldungsgegenstand näher erläutern.

Folgende handelsübliche, anionische Produkte werden als Antistatika verwendet: Fettsäuresarkosinat (Na-Salz) (1), Palmkernfettsäuresarkosinat (2), Lauroylsarkosinat (3), Palmkern/Kokosfettsäuresarkosinat (4), eine Mischung aus Mono-, Di-und Tri(alkyltetraglykolether)-o-Phosphorsäureestern (5), Kokosfett-Kondensationsprodukt mit Eiweiß als Kaliumsalz (6). Die Verbindungen werden unter den Namen ARKOMON®, MEDIALAN®, HOSTAPHAT® von der HOECHST AG bzw. LAMEPON® von der Chemischen Fabrik Grünau vertrieben.

Die verwendeten Sulfonatgruppen tragenden Mischpolyester, zum Beispiel erhältlich von der Eastman Chem.Prod. Inc. werden durch folgende Daten charakterisiert.

| Bezeich- nung | Molekular- gewicht | $T_g$ (°C) | Hydroxyl- zahl | Säure- zahl |
|---|---|---|---|---|
| AQ 29 | 14 000 | 29 | 6,0 | < 2 |
| AQ 38 | 18 000 | 38 | 5,0 | < 2 |
| AQ 55 | 18 000 | 55 | 5,3 | < 2 |

Beispiel 1:

Als Basis diente eine klare 100 µm dicke, biaxial gereckte und thermisch fixierte Folie aus Polyethylenterephthalat. Sie wurde mit einer Rollrakel beschichtet. Es entstanden etwa 12µm dicke Naßfilme aus Lösungen folgender Zusammensetzung:     Basislack mit 10% Feststoff

207 g     entionisiertes Wasser
60 g      Isopropylalkohol
133 g     Mischpolyester-Dispersion 30%ig aus AQ 55

Zu je 25g Basislack wurden 3g Lösung eines 5%igen Antistatikums in Wasser zugefügt.

Die Naßfilme wurden in einem Trockenschrank mit Umluft 3 Minuten bei 120°C getrocknet. Es entstanden klare, dünne Überzüge, deren Haftung, Wasserfestigkeit, Klebeneigung und Oberflächenwiderstand geprüft wurde. Tabelle 1 enthält die Ergebnisse für die 6% Antistatikum enthaltenden Schichten.

## Tabelle 1

| Anti-statikum | Haftung | Wasser-festig-keit | Klebetest | Oberflächen-widerstand (Ohm) |
|---|---|---|---|---|
| - | schlecht | gut | schlecht | $> 10^{14}$ |
| (1) | gut | fast gut | gut | $7,0 \times 10^{10}$ |
| (6) | gut | fast gut | gut | $6,5 \times 10^{11}$ |
| (2) | gut | gut | gut | $6,5 \times 10^{10}$ |
| (4) | gut | fast gut | gut | $3,2 \times 10^{10}$ |
| (5) | mittel bis schlecht | fast gut | gut | $5,5 \times 10^{11}$ |
| (3) | gut | fast gut | gut | $9,0 \times 10^{9}$ |

Es wurde gefunden, daß sich bei höheren Konzentrationen an (5) eine schmierige unbrauchbare Oberfläche ergibt.

Ausführung der Prüfungen:

(1) Haftung der Schicht

Der Film wird mit einem Gitterschnitt nach DIN 53151 versehen. Mit einem Scherengriff befestigt man auf der verletzten Fläche ein Klebeband (TESABAND 104 farblos) und zieht es anschließend ruckartig wieder ab. Bei guter Haftung dürfen keine Filmbestandteile abgerissen werden.

(2) Wasserfestigkeit

Ein Tropfen entionisiertes Wasser wird auf der zu prüfenden Oberfläche verrieben. Bei guter Wasserfestigkeit wird die Schicht nicht abgelöst.

(3) Klebetest

Das Folienmuster wird zwischen 85°C heißen Walzen einer Lichtpausmaschine geführt.Dabei darf die Antistatik-Schicht bei gutem Ergebnis keine Markierungen zeigen.

(4) Oberflachenwiderstand

Die Proben werden 24 Stunden bei etwa 23°C und 50 % relativer Feuchte konditioniert. Der Oberflächenwiderstand wird mit Federzungenelektroden nach DIN 53482 gemessen. Er ist ein Maß für die antistatische Wirk samkeit und sollte bei guter Antistatik $1,0 \bullet 10^{12}$ Ohm nicht erreichen.

Beispiel 2:

Es wurden nach Beispiel 1 Antistatik-Schichten aus folgenden Lösungen hergestellt:

(I)
212 g Entionisiertes Wasser
60 g Isopropylalkohol
133 g Mischpolyester-Dispersion (30 %ig) aus AQ 29

(II)
185 g Entionisiertes Wasser
60 g Isopropylalkohol
160 g Mischpolyester-Dispersion (25 %ig) aus AQ 38

(III)
212 g Entionisiertes Wasser
60 g Isopropylalkohol
133 g Mischpolyester-Dispersion (30 %ig) aus AQ 55

Je 190 g dieser Lösungen wurden mit 20 g einer 10 % igen Lösung aus a (2) oder b (4) gemischt.

Die Schichten enthielten damit 10 % des als Antistatikum und zusätzlich als Netzmittel wirkenden Zusatzes.In allen Fällen entstanden klare Überzüge, die auf der Polyesterfolie ausgezeichnet hafteten. Tabelle 2 enthält Ergebnisse aus diesen Versuchen.

## Tabelle 2:

| Lösung | Wasser-festigkeit | Klebetest | Oberflächen-widerstand (Ohm) |
|--------|-------------------|-----------|------------------------------|
| I a    | fast gut          | fast gut  | $2,7 \times 10^{10}$         |
| I b    | fast gut          | gut       | $6,5 \times 10^{10}$         |
| II a   | gut               | mittel    | $2,3 \times 10^{10}$         |
| II b   | fast gut          | fast gut  | $5,0 \times 10^{9}$          |
| III a  | gut               | gut       | $8,0 \times 10^{9}$          |
| III b  | fast gut          | fast gut  | $1,3 \times 10^{10}$         |

Beispiel 3:

Die Antistatik-Schichten wurden wie in Beispiel 1 beschrieben hergestellt. Die Lösungen I a bis III b aus Beispiel 2 enthielten zusätzlich als vernetzende Mittel entweder Hexamethoxymethylmelamin (CYMEL® 300) oder ein teilverethertes Melamin-Formaldehydharz (MADURIT® MW 815). In der getrockneten Antistatik-Schicht betrug der Anteil Vernetzungsmittel 5 %.

Die Lösungen wurden vor der Verarbeitung mit 5 %iger Citronensäure auf einen pH-Wert von etwa 4,3 gestellt.

Nach der Trocknung erhielt man klare Überzüge, die auf der Polyesterfolie ausgezeichnet hafteten. Weitere Prüfungsergebnisse enthält Tabelle 3.

## Tabelle 3:

| Lösung | Vernetzungs-mittel | Wasser-festigkeit | Klebetest | Oberflächen-widerstand (Ohm) |
|--------|--------------------|--------------------|-----------|------------------------------|
| I a | CYMEL | fast gut | gut | $1,1 \times 10^{11}$ |
|     | MADURIT | gut | gut | $1,5 \times 10^{12}$ |
| I b | CYMEL | gut | gut | $3,2 \times 10^{11}$ |
|     | MADURIT | gut | gut | $2,9 \times 10^{12}$ |
| II a | CYMEL | gut | fast gut | $3,8 \times 10^{10}$ |
|      | MADURIT | gut | gut | $7,5 \times 10^{11}$ |
| II b | CYMEL | gut | gut | $1,3 \times 10^{11}$ |
|      | MADURIT | gut | gut | $1,6 \times 10^{12}$ |
| III a | CYMEL | fast gut | gut | $2,2 \times 10^{11}$ |
|       | MADURIT | gut | gut | $2,6 \times 10^{12}$ |
| III b | CYMEL | mittel | gut | $2,8 \times 10^{11}$ |
|       | MADURIT | gut | gut | $9,0 \times 10^{12}$ |

Beispiel 4 :

Antistatik-Schichten wurden nach Beispiel 1 aus Lösungen folgender Zusammensetzung hergestellt:

Basislack mit 10 % Feststoff

233 g Entionisiertes Wasser

60 g Isopropylalkohol

67 g Mischpolyester-Dispersion (30 %ig) aus AQ 55

40 g Dispersion 50 %ig aus Polymethylmethacrylat

Je 25 g Basislack wurden mit 3 g Lösung von 5 % igem Antistatikum in Wasser gemischt. Es entstanden nach der Trocknung klare Filme, die auf Polyesterfolie gut hafteten. Sie enthielten 6 % Antistatikum.

Die Tabelle 4 bringt dazu weitere Ergebnisse.

| Anti-statikum | Wasser-festigkeit | Klebetest | Oberflächen-widerstand (Ohm) |
|---|---|---|---|
| Ohne | gut | schlecht | $> 10^{14}$ |
| (1) | fast gut | gut | $3,2 \times 10^{10}$ |
| (6) | fast gut | gut | $4,6 \times 10^{11}$ |
| (2) | gut | gut | $1,0 \times 10^{10}$ |
| (4) | fast gut | gut | $1,1 \times 10^{10}$ |

Beispiel 5

Wie in Beispiel 1 angegeben, wurden Antistatik-Beschichtungen auf 100 μm dicker Folie hergestellt. Als Lösungen dienten die Ansätze II und III von Beispiel 2.

Ihnen wurden 10 %ige Lösungen von a (2) und b (4) zugesetzt. Der Anteil der Antistatika in der Schicht wurde auf 6, 10 und 14 % bemessen. Es entstanden klare Überzüge mit guter Haftung auf der Folie. Die Prüfergebnisse enthält Tabelle 5.

Tabelle 5:

| Lösung 1I mit Mischpolyester-Dispersion   AQ 38 | | | | | |
|---|---|---|---|---|---|
| Antistati-kum | Zusatz (%) | Wasser-festig-keit | Klebetest | Oberflächen-widerstand (Ohm) A | B[+] |
| (2) | 0 | gut | schlecht | $> 10^{14}$ | - |
| | 6 | gut | fast gut | $1,2 \times 10^{10}$ | $1,3 \times 10^{11}$ |
| | 10 | gut | gut | $7,0 \times 10^{9}$ | $1,5 \times 10^{11}$ |
| | 14 | gut | gut | $7,5 \times 10^{9}$ | $1,0 \times 10^{11}$ |
| (4) | 6 | gut | gut | $1,4 \times 10^{10}$ | $1,7 \times 10^{11}$ |
| | 10 | gut | gut | $7,5 \times 10^{11}$ | $6,5 \times 10^{10}$ |
| | 14 | gut | gut | $4,2 \times 10^{9}$ | $2,8 \times 10^{10}$ |

| Lösung III mit Mischpolyester-Dispersion AQ 55 | | | | | |
|---|---|---|---|---|---|
| Antistati-kum | Zusatz (%) | Wasser-festig-keit | Klebetest | Oberflächen-widerstand (Ohm) A | B[+] |
| (2) | 0 | gut | gut | $> 10^{14}$ | - |
|  | 6 | gut | gut | $4,0 \times 10^{10}$ | $7,5 \times 10^{11}$ |
|  | 10 | gut | gut | $4,2 \times 10^{10}$ | $1,9 \times 10^{11}$ |
|  | 14 | gut | gut | $1,5 \times 10^{10}$ | $2,7 \times 10^{11}$ |
| (4) | 6 | gut | gut | $3,6 \times 10^{10}$ | $1,0 \times 10^{11}$ |
|  | 10 | gut | gut | $5,0 \times 10^{9}$ | $9,0 \times 10^{10}$ |
|  | 14 | fast gut | gut | $1,5 \times 10^{10}$ | $6,5 \times 10^{10}$ |

[+] Der Wert für den Oberflächenwiderstand B wurde an der Probe nach Behandlung mit Wasser gemessen.

Zur Prüfung des Oberflächenwiderstandes nach Behandlung mit Wasser wurden die Proben durch entionisiertes Wasser gezogen, bei Zimmertemperatur getrocknet und 24 Stunden bei etwa 23°C und 50 % relativer Luftfeuchtigkeit konditioniert. Der Oberflächenwiderstand wurde danach, wie in Beispiel 1 angegeben, gemessen. Eine geringe Veränderung gegenüber dem ursprünglichen Wert zeigt gute Wasserfestigkeit der Antistatik an.

Beispiel 6:

Diazoduplizierfilme auf Basis 125 μm dicker Folie aus Polyethylenterephthalat wurden auf der Rückseite in einer kontinuierlich arbeitenden Beschichtungs-Einrichtung dünn mit folgenden Lösungen versehen:

Lösung I 118,7 g Mischpolyester-Dispersion 30 %ig aus AQ 55
189,7 g Entionisiertes Wasser
53,6 g Isopropylalkohol
38,0 g (2), 10 %ig in Wasser

Lösung II 100,0 g Mischpolyester-Dispersion 30 %ig aus AQ 55
160,0 g Entionisiertes Wasser
45,2 g Isopropylalkohol
32,0 g (2), 10 %ig in Wasser
36,6 g Hexamethoxymethylmelamin, 5 %ig in Ethylalkohol/Wasser 1:1

26,5 g Citronensäure 5 %ig in Wasser

Es wurde mit 120°C heißer, stark bewegter Luft etwa 20 Sekunden getrocknet. Man erhielt Überzüge, deren Eigenschaften in Tabelle 6 beschrieben sind.

## Tabelle 6

| Verwende-te Lösung | Haftung | Wasser-festig-keit | Klebetest | Oberflächen-widerstand (Ohm) | |
|---|---|---|---|---|---|
| | | | | A | B |
| keine | - | - | gut | $> 10^{14}$ | - |
| I | gut | fast gut | gut | $2,8 \times 10^9$ | $4,8 \times 10^{10}$ |
| II | gut | fast gut | gut | $1,9 \times 10^9$ | $2,0 \times 10^{10}$ |

Zur weiteren Beurteilung der Qualität dieser drei Materialien wurde das "Handling" von 148 mm $\times$ 105 mm großen Formaten im Stapel untersucht.

Die Formate dürfen dabei nicht zu stark gleiten, sie sollen sich einwandfrei entstapeln und wieder stapeln lassen. Hier hatte die mit Lösung II ausgerüstete Probe die günstigsten Eigenschaften.

Beispiel 7:

Diazoduplizierfilme auf Basis 125 µm dicker Folie aus Polyethylenterephthalat wurden auf der Rückseite in einer kontinuierlich arbeitenden Beschichtungs-Einrichtung dünn mit folgenden Lösungen versehen:

Lösung I 100,2 g Mischpolyester-Dispersion 30 %ig aus aus AQ 55
134,3 g Entionisiertes Wasser
53,7 g Isopropylalkohol
79,2 g (4), 10 %ig in Wasser
6,2 g Hexamethoxymethylmelamin, 5 %ig in Ethylalkohol/Wasser 1:1
26,4 g Citronensäure 5 %ig in Wasser

Lösung II 100,8 g Mischpolyester-Dispersion 30 %ig aus AQ 55
136,8 g Entionisiertes Wasser
53,7 g Isopropylalkohol
79,2 g (4), 10 %ig in Wasser
3,1 g Hexamethoxymethylmelamin, 5 %ig in Ethylalkohol/Wasser 1:1
26,4 g Citronensäure 5 %ig in Wasser

Es wurde mit 120°C heißer, stark bewegter Luft etwa 20 Sekunden getrocknet. Man erhielt Überzüge, deren Eigenschaften in Tabelle 7 beschrieben sind.

| Verwende-te Lösung | Haftung | Wasser-festig-keit | Klebe-test | Oberflächen-widerstand (Ohm) | |
|---|---|---|---|---|---|
| | | | | A | B |
| keine | - | - | gut | $> 10^{14}$ | - |
| I | gut | fast gut | gut | $5,5 \times 10^9$ | $3,2 \times 10^{10}$ |
| II | gut | fast gut | gut | $6,5 \times 10^9$ | $3,4 \times 10^{10}$ |

Das in Beispiel 6 erwähnte "Handling" von 148 mm × 105 mm großen Formaten war allen drei Mustern gut.

**Ansprüche**

1. Biaxial gereckte und thermisch fixierte Polyesterfolie, die auf mindestens einer Seite eine, einen Sulfonatgruppen tragenden Mischpolyester enthaltende Beschichtung besitzt, dadurch gekennzeichnet, daß die Beschichtung mindestens ein von Aminosäuren oder Eiweißhydrolysaten abgeleitetes Salz enthält.

2. Polyesterfolie nach Anspruch 1, dadurch gekennzeichnet, daß die Beschichtung ein Salz des N-Acylsarkosins enthält.

3. Polyesterfolie nach Anspruch 1, dadurch gekennzeichnet, daß die Beschichtung ein Salz des N-Acylderivates von Eiweißhydrolysaten enthält.

4. Polyesterfolie nach Ansprüchen 1 bis 3, dadurch gekennzeichnet, daß die Beschichtung 5 bis 25 Gewichtsprozent Salz enthält.

5. Polyesterfolie nach Anspruch 1, dadurch gekennzeichnet, daß die Beschichtung einen Vernetzer enthält.

6. Polyesterfolie nach Anspruch 5, dadurch gekennzeichnet, daß als Vernetzer mindestens eine von Harnstoff oder Melamin abgeleitete, teilweise oder ganz veretherte Formaldehydverbindung vorhanden ist.

7. Polyesterfolie nach Anspruch 6, dadurch gekennzeichnet, daß als Vernetzer Hexamethoxymethylmelamin vorhanden ist.

8. Polyesterfolie nach Anspruch 1, dadurch gekennzeichnet, daß die Beschichtung zusätzlich Polymethylmethacrylat enthält.

9. Folie nach Anspruch 1, dadurch gekennzeichnet, daß sie aus Polyalkylenterephthalat besteht.

10. Diazo-Duplizierfilm mit einem Filmträger aus Polyethylenterephthalat, dadurch gekennzeichnet, daß er rückseitig eine antistatische Beschichtung nach Anspruch 1 besitzt.